# EUROPÄISCHE PATENTSCHRIFT

(11) **EP 1 926 920 B1**
(45) Veröffentlichungstag und Bekanntmachung des Hinweises auf die Patenterteilung: **10.11.2010**
(21) Anmeldenummer: 05797927.0
(22) Anmeldetag: 23.09.2005
(51) Int. Cl.: F16D 3/224

(54) **OPTIMIERTES GLEICHLAUFFESTGELENK MIT HINTERSCHNITTFREIEN KUGELBAHNEN**
OPTIMIZED CONSTANT-VELOCITY FIXED JOINT WITH BALL TRACKS FREE FROM UNDERCUTS
JOINT HOMOCINETIQUE FIXE OPTIMISE A CHEMINS DE ROULEMENT A BILLES SANS CONTRE-DEPOUILLE

(43) Veröffentlichungstag der Anmeldung: 04.06.2008
(73) Patentinhaber: GKN Driveline International GmbH, 53797 Lohmar (DE)
(72) Erfinder: DIEZ, Marta, E-20018 San Sebastian (ES); CUBERT, José Manuel, E-20018 San Sebastian (ES); GUTIERREZ, Inaki, E-20003 San Sebastian (ES); SCHMEINK, Joachim, 53797 Lohmar (DE)
(74) Vertreter: Rössler, Matthias
(86) Internationale Anmeldenummer: PCT/EP2005/010291
(87) Internationale Veröffentlichungsnummer: WO 2007/036237

(56) Entgegenhaltungen:
- WO-A-2005/068863
- WO-A-2005/078302
- US-A1- 2003 083 135

## Beschreibung

Die Erfindung betrifft ein Gleichlaufdrehgelenk in Form eines Gleichlauffestgelenks zur Drehmomentübertragung. Das Gleichlauffestgelenk umfaßt ein Gelenkaußenteil mit äußeren Kugelbahnen, ein Gelenkinnenteil mit inneren Kugelbahnen, drehmomentübertragenden Kugeln, die in Bahnpaaren aus jeweils einer äußeren und einer inneren Kugelbahn geführt sind, sowie einen Kugelkäfig mit umfangsverteilten Käfigfenstern, in denen die Kugeln aufgenommen sind. Dabei werden die Kugeln in einer gemeinsamen Mittenebene gehalten und bei Gelenkbeugung auf die winkelhalbierende Ebene geführt. Derartige Gleichlaufdrehgelenke sind als Rzeppa Festgelenke (RF) bzw. als hinterschnittfreie Festgelenke (UF) bekannt.

Aus der DE 197 06 864 C1 ist ein Gleichlaufdrehgelenk mit hinterschnittfreien Kugelbahnen bekannt, wobei die Kugelbahnen des Gelenkaußenteils jeweils konvex gekrümmte Innenabschnitte und zur Öffnungsseite hin jeweils dazu entgegengesetzt konkav gekrümmte Endabschnitte haben.

Aus der US 5 782 696 ist ein Gleichlaufdrehgelenk mit hinterschnittfreien Kugelbahnen bekannt, wobei die Krümmungsmittelpunkte der Kugelbahnen gegenüber der Mittenebene axial versetzt sind (Offset).

Die Entwicklung im Automobilbau verlangt nach erhöhter Leistungsfähigkeit der genannten Gleichlaufdrehgelenke. Das bedeutet, daß bei vorgegebenem Bauraum bzw. vorgegebener Masse die Lebensdauer und der Funktionsumfang gesteigert werden sollen oder, daß bei vorgegebener Haltbarkeit und Funktionsumfang der Bauraum bzw. die Masse reduziert werden sollen. Die Schwierigkeit besteht dabei in dem Wechselverhältnis zwischen Größe des Gelenks einerseits und dessen Festigkeit und Lebensdauer andererseits.

Aus der EP 661 475 A1 ist ein Gleichlaufdrehgelenk als Rzeppa Festgelenk mit durchgängig gekrümmten Kugelbahnen mit Hinterschnitt bekannt. Die Kugeln haben einen Durchmesser BD und liegen auf einem Rollkreisdurchmesser BCD um den Gelenkmittelpunkt M. Es wird gesagt, daß das Verhältnis zwischen dem Rollkreisdurchmesser BCD und dem Kugeldurchmesser BD üblicherweise zwischen 3,1 und 3,5 liegt. Als besonders vorteilhaft in Hinblick auf eine hohe Stabilität des Gleichlaufdrehgelenks wird genannt, das Verhältnis zwischen dem Rollkreisdurchmesser BCD und dem Kugeldurchmesser BD größer als 3,5 zu wählen.

Aus der WO 2005/068863 A1 ist ein Gleichlaufdrehgelenk bekannt, bei dem das Verhältnis zwischen Rollkreis durchmesser BCD und dem Kugeldurchmesser zwischen 2 und 5 liegt.

Es ist Aufgabe der vorliegenden Erfindung, ein Gleichlaufdrehgelenk der eingangs genannten Art vorzuschlagen, das eine höhere Festigkeit und eine längere Lebensdauer aufweist, ohne Einbußen übriger Parameter hinnehmen zu müssen.

Die Lösung besteht in einem Kugelgleichlaufdrehgelenk in Form eines Festgelenks, umfassend
ein Gelenkaußenteil mit äußeren Kugelbahnen, die axial hinterschnittfrei gestaltet sind;
ein Gelenkinnenteil mit inneren Kugelbahnen, die axial hinterschnittfrei gestaltet sind;
drehmomentübertragende Kugeln, die in aus jeweils einer äußeren und einer inneren Kugelbahn gebildeten Bahnpaaren geführt sind und deren Kugelmittelpunkte Z auf einem Rollkreisdurchmesser PCD um einem Gelenkmittelpunkte M liegen und die einen Kugeldurchmesser D aufweisen;
einen Kugelkäfig mit umfangsverteilten Käfigfenstem in denen die Kugeln aufgenommen sind und in einer gemeinsamen Mittenebene gehalten werden,
wobei die Anzahl der drehmomentübestragenden Kugeln und der Käfigtenster sechs beträgt wobei das Verhältnis zwischen dem Rollkreisdurchmesser PCD und dem Kugeldurchmesser D wischen 2,96 und 3,08 liegt.

Der Vorteil liegt darin, daß die Kugeln einen verhältnismäßig großen Durchmesser in bezug auf den Rollkreisdurchmesser PCD aufweisen. Hierdurch ergibt sich eine besonders lange Lebensdauer, ohne daß die Baugröße bzw. die Masse des Gelenks vergrößert wird. Die Kugelbahnen des Gleichlaufdrehgelenks sind hinterschnittfrei, so daß spanlose Fertigungsverfahren zur Anwendung kommen können. Dabei können die Kugelbahnen entweder neben einem gekrümmten Abschnitt einen geradlinigen parallel zur Längsachse verlaufenden Abschnitt haben, oder sie können einen durchgehenden Krümmungsradius bis zur Stirnfläche des Gelenkaußenteils aufweisen, oder sie können aus zumindest zwei aneinander anschließenden unterschiedlich gekrümmten Abschnitten zusammengesetzt sein. Das erfindungsgemäße Gleichlaufdrehgelenk bezieht sich insbesondere auf ein Gelenk mit sechs drehmomentübertragenden Kugeln. Es ist besonders günstig, wenn das Verhältnis zwischen dem Rollkreisdurchmesser PCD und dem Kugeldurchmesser D zwischen 2,97 und 3,074 liegt.

Darüber hinaus hat der Kugelkäfig eine radiale Käfigdicke B, wobei das Verhältnis zwischen der Käfigdicke B und dem Rollkreisdurchmesser PCD zwischen 0,08 und 0,1, vorzugsweise zwischen 0,089 und 0,094 liegt. Die Käfigdicke bezieht sich auf eine radiale Erstreckung zwischen einer sphärischen Innenfläche und einer sphärischen Außenfläche des Kugelkäfigs. Der Vorteil liegt darin, daß die Käfigdicke im Verhältnis zum Rollkreisdurchmesser verhältnismäßig groß ist. Hierdurch ergeben sich vergrößerte Querschnittsflächen des Kugelkäfigs, insbesondere im Bereich der zwischen den Fenstern gebildeten Stege, was zu einer erhöhten Festigkeit des Gelenks führt.

Weiterhin liegt das Verhältnis zwischen der Käfigdicke B und dem Kugeldurchmesser D vorzugsweise zwischen 0,27 und 0,29. Dabei ist es besonders günstig, wenn das genannte Verhältnis von Käfigdicke B zu Kugeldurchmesser D zwischen 0,275 und 0,280 liegt. Auch aus dieser Ausgestaltung ergibt sich eine verhältnismäßig große Käfigdicke, was sich günstig auf die Festigkeit des Gelenks auswirkt.

Nach einer bevorzugten Weiterbildung hat eine mit dem Gelenkinnenteil drehfest verbundene Welle einen tragenden Wellendurchmesser DW, wobei das Verhältnis zwischen der Käfigdicke B und dem tragenden Wellendurchmesser DW zwischen 0,21 und 0,24, vorzugsweise zwischen 0,218 und 0,231 liegt. Diese Ausgestaltung hat ebenfalls den Vorteil einer hohen Festigkeit des Gelenks, bei im übrigen gleicher Baugröße und gleicher Masse. Der tragende Wellendurchmesser DW ist axial benachbart zu einer Längsverzahnung zur Verbindung mit dem Gelenkinnnenteil angeordnet. In Konkretisierung ist der tragende Wellendurchmesser DW kleiner ist als ein größter Außendurchmesser der Längsverzahnung.

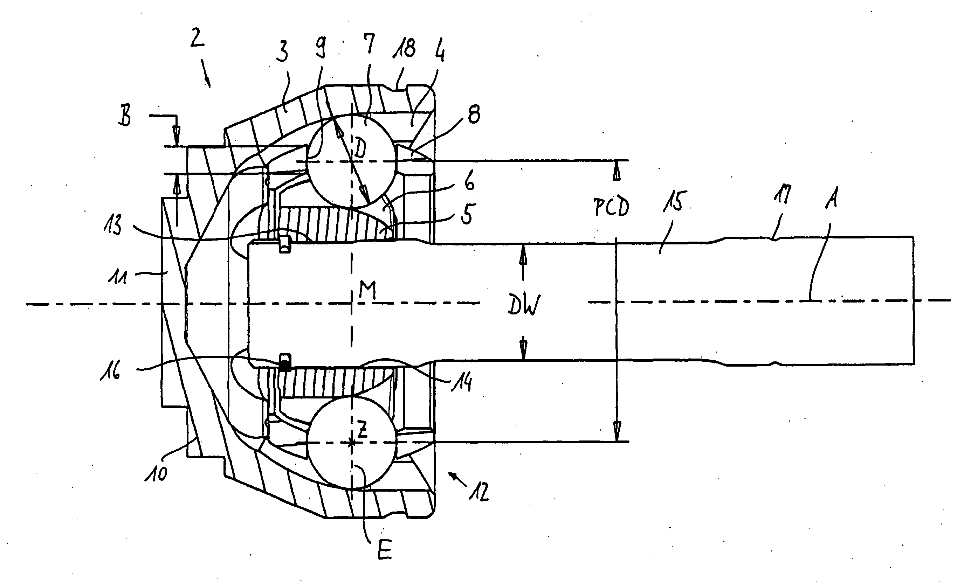

Ein erfindungsgemäßes Ausführungsbeispiel wird nachstehend anhand der einzigen Zeichnungsfigur erläutert.

Es zeigt die einzige Zeichnungsfigur ein Gleichlaufdrehgelenk 2 nach Art eines Festgelenks (UF), das ein Gelenkaußenteil 3 mit Außenbahnen 4, ein Gelenkinnenteil 5 mit Innenbahnen 6, drehmomentübertragende Kugeln 7, die jeweils in einem aus einer Außenbahn 4 und einer Innenbahn 6 gebildetem Bahnpaar geführt sind, sowie einen Kugelkäfig 8 mit umfangsverteilten Fenstern 9, in dem die Kugeln 7 aufgenommen sind, umfaßt. Die Kugeln 7 werden in einer gemeinsamen Mittenebene E gehalten und bei Gelenkbeugung auf die winkelhalbierende Ebene geführt. Dabei liegen die Kugelmittelpunkte Z auf einem Rollkreisdurchmesser PCD um einem Gelenkmittelpunkte M und haben einen Kugeldurchmesser D. Die Anzahl der drehmomentübertragenden Kugeln 7 und der Käfigfenster 9 beträgt sechs.

Das Gelenkaußenteil 3 ist einseitig durch einen Boden 10 abgeschlossen, an den sich ein Gelenkzapfen 11 zur Drehmomentübertragung anschließt. Dem Boden 10 liegt eine Öffnung 12 des Gelenkaußenteils 3 in axialer Richtung gegenüber. Die im Gelenkaußenteil 3 vorhandenen umfangsverteilten Außenbahnen 4 sind hinterschnittfrei ausgebildet und haben - von der Öffnungsseite betrachtet - einen sich zur Drehachse A parallel erstreckenden geraden Bahnabschnitt und einen sich daran anschließenden gekrümmten Bahnabschnitt. Die im Gelenkinnenteil 5 vorgesehenen Innenbahnen 6 sind ebenfalls hinterschnittfrei gestaltet und umfassen einen gekrümmten Bahnabschnitt und einen sich daran anschließenden geraden Bahnabschnitt, der sich parallel zur Längsachse A erstreckt. Alle paarweise aus jeweils einer Innenbahn 6 und einer Außenbahn 4 gebildeten Kugelbahnen erweitern sich in Richtung zur Öffnung 12 des Gelenks. Die erfindungsgemäße Ausgestaltung läßt sich jedoch auch auf solche hinterschnittfreie Festgelenke übertragen, bei denen die Kugelbahnen sich in Richtung zum Boden öffnen, was hier nicht dargestellt ist.

Das Gelenkinnenteil 5 umfaßt eine zentrale Öffnung 14, in die eine Welle 15 als Anschlußteil eingesteckt und mittels eines Sicherungsrings 16 axial fixiert ist. Die Drehmomentübertragung zwischen Welle 15 und Gelenkinnenteil 5 erfolgt mittels einer Längsverzahnung 13, die über ihre axiale Länge ein gestuftes Profil aufweist. Dabei verläuft der dargestellte Längsschnitt in der oberen Bildhälfte durch den Zahnfuß und in der unteren Bildhälfte durch den Zahnkopf der Verzahnung der Welle 15. Die Welle 15 hat im Anschluß an die Längsverzahnung 13 einen verjüngten Bereich mit einem kleinsten Außendurchmesser DW, der den tragenden Bereich der Welle 15 definiert. Die Welle 15 hat eine Ringnut 17, in die ein erster Bund eines hier nicht dargestellten Faltenbalgs eingreifen kann, und das Gelenkaußenteil 3 hat eine umlaufende Ausnehmung 18, an der ein zweiter Bund des Faltenbalgs befestigt werden kann. Der Faltenbalg dient zur Abdichtung des Gelenkraums.

Es ist ersichtlich, daß das Verhältnis zwischen dem Rollkreisdurchmesser PCD, auf dem die Kugelmittelpunkte Z liegen, und dem Kugeldurchmesser D etwa 3,0 beträgt. Für andere Baugrößen des erfindungsgemäßen Gleichlaufdrehgelenks kann dieses Verhältnis zwischen 2,96 und 3,08 liegen (2,96 < PCD / D < 3,08). Durch die erfindungsgemäße Konstruktion ergibt sich ein Gleichlaufdrehgelenk mit erhöhter Festigkeit und damit verlängerter Lebensdauer.

Es ist weiterhin ersichtlich, daß das Verhältnis zwischen der Käfigdicke B und dem Rollkreisdurchmesser PCD etwa 0,09 beträgt. Für Gelenke anderer Baugröße kann dieses Verhältnis auch minimal 0,08 und maximal 0,1 betragen (0,08 < B / PCD < 0,1).

Weiterhin liegt das Verhältnis zwischen der Käfigdicke B und dem Kugeldurchmesser D bei etwa 0,275. Andere Baugrößen des erfindungsgemäßen Gelenks können auch ein Verhältnis von Käfigdicke B zu Kugeldurchmesser D aufweisen, das zwischen 0,27 und 0,28 liegt (0,27 < B / D < 0,28).

Das Verhältnis zwischen der Käfigdicke B und dem tragenden Wellendurchmesser DW beträgt vorliegend etwa 0,23. Für andere Baugrößen des gezeigten Gleichlaufdrehgelenks kann dieses Verhältnis auch minimal 0,21 und maximal 0,24 betragen (0,21 < B / DW < 0,24).

Das erfindungsgemäße Gleichlaufdrehgelenk zeichnet sich durch Kugeln mit einem verhältnismäßig großen Kugeldurchmesser aus, was zu einer höheren Lebensdauer führt. Gleichzeitig wird der hieraus resultierende Nachteil längerer Käfigfenster durch eine größere radiale Käfigdicke aufgehoben, so daß die Käfigfestigkeit erhöht wird. Insgesamt hat das erfindungsgemäße Gleichlaufdrehgelenk eine hohe Lebensdauer und eine hohe Festigkeit bei gleicher oder kleinerer Baugröße bzw. Masse.

### Bezugszeichenliste

- 1:
- 2: Gleichlaufdrehgelenk
- 3: Gelenkaußenteil
- 4: Außenbahn
- 5: Gelenkinnenteil
- 6: Innenbahn
- 7: Kugel
- 8: Kugelkäfig
- 9: Fenster
- 10: Boden
- 11: Gelenkzapfen
- 12: Öffnung
- 13: Längsverzahnung
- 14: Öffnung
- 15: Welle
- 16: Sicherungsring
- 17: Ringnut
- 18: Ausnehmung

- A: Drehachse
- D: Kugeldurchmesser
- B: Käfigdicke
- M: Gelenkmittelpunkt
- E: Ebene
- DW: Wellendurchmesser
- PCD: Rollkreisdurchmesser
- Z: Kugelmittelpunkt

## Patentansprüche

1. Kugelgleichlaufdrehgelenk in Form eines Festgelenks, umfassend
ein Gelenkaußenteil (3) mit äußeren Kugelbahnen (4), die axial hinterschnittfrei gestaltet sind;
ein Gelenkinnenteil (5) mit inneren Kugelbahnen (6), die axial hinterschniffrei gestaltet sind;
drehmomentübertragende Kugeln (7), die in aus jeweils einer äußeren und einer inneren Kugelbahn (4, 6) gebildeten Bahnpaaren geführt sind und deren Kugelmittelpunkte (Z) auf einem Rollkreisdurchmesser (PCD) um einen Gelenkmittelpunkt (M) liegen und die einen Kugeldurchmesser (D) aufweisen; einen Kugelkäfig (8) mit umfangsverteilten Käfigfenstem (9), in denen die Kugeln (7) aufgenommen sind und in einer gemeinsamen Mittenebene (E) gehalten werden
wobei die Anzahl der drehmomentübertragenden Kugeln (7) und der Käfigtenster (9) sechs beträgt;
**dadurch gekennzeichnet, daß** das Verhältnis zwischen dem Rollkreisdurchmesser (PCD) und dem Kugeldurchmesser. (D) zwischen 2,96 und 3,08 liegt (2,96 < PCD / D < 3.08) und
daß der Kugelkäfig eine radiale Käfigdicke (B) aufweist, wobei das Verhältnis zwischen der Käfigdicke (B) und dem Rollkreisdurchmesser (PCD) zwischen 0,08 und 0,1 liegt (0,08 < B / PCD < 0,1).

2. Gleichlaufdrehgelenk nach Anspruch 1,
**dadurch gekennzeichnet,**
**daß** der Kugelkäfig eine radiale Käfigdicke (B) aufweist, wobei das Verhältnis zwischen der Käfigdicke (B) und dem Kugeldurchmesser (D) zwischen 0,27 und 0,29 liegt (0,27 < B / D < 0,29).

3. Gleichlaufdrehgelenk nach Anspruch 1 oder 2,
**dadurch gekennzeichnet,**
**daß** der Kugelkäfig (8) im Bereich der Fenster (9) eine radiale Käfigdicke (B) aufweist und daß eine mit dem Gelenkinnenteil drehfest verbundene Welle (15) einen tragenden Wellendurchmesser (DW) aufweist, wobei das Verhältnis der Käfigdicke (B) zum tragenden Wellendurchmesser (DW) zwischen 0,21 und 0,24 liegt (0,21 < B / DW < 0,24).

4. Gleichlaufdrehgelenk nach Anspruch 3,
**dadurch gekennzeichnet, daß** der tragende Wellendurchmesser (DW) axial benachbart zu einer Längsverzahnung (13) zur Verbindung mit dem Gelenkinnenteil (5) angeordnet ist.

5. Gleichlaufdrehgelenk nach Anspruch 4,
**dadurch gekennzeichnet,**
**daß** der tragende Wellendurchmesser (DW) kleiner ist als ein größter Außendurchmesser der Längsverzahnung.

## Claims

1. A constant velocity universal ball joint in the form of a fixed joint, comprising
an outer joint part (3) with outer ball tracks (4), which are formed axially undercut-free;
an inner joint part (5) with inner ball tracks (6), which are formed axially undercut-free;
torque transmitting balls (7), which are guided in pairs of tracks each formed of an outer and an inner ball track (4, 6) and whose ball centres (Z) are positioned on a pitch circle diameter (PCD) around a joint centre (M) and which comprise a ball diameter (D);
a ball cage (8) with circumferentially distributed cage windows (9), in which the balls (7) are received and held in a common central plane (E), wherein the number of the torque transmitting balls (7) and of the cage windows (9) is six;
**characterized in that** the ratio between the pitch circle diameter (PCD) and the ball diameter (D) ranges between 2.96 and 3.08 (2.96 < PCD/ D < 3.08) and **in that** the ball cage has a radial cage thickness (B), wherein the ratio between the cage thickness (B) and the pitch circle diameter (PCD) ranges between 0.08 and 0.1 (0.08 < B/PCD < 0.1).

2. Constant velocity universal ball joint according to claim 1, **characterized in that** the ball cage has a radial cage thickness (B), wherein the ratio between the cage thickness (B) and the ball diameter (D) ranges between 0.27 and 0.29 (0.27 < B/D < 0.29).

3. Constant velocity rotary ball joint according to claim 1 or 2, **characterized in that** the ball cage (8) in the region of the windows (9) comprises a radial cage thickness (B) and that a shaft (15) connected to the inner joint part in a rotationally fixed way has a supporting shaft diameter (DW), wherein the ratio between the cage thickness (B) to the supporting shaft diameter (DW) ranges between 0.21 and 0.24 (0.21 < B/DW < 0.24).

4. Constant velocity universal ball joint according to claim 3, **characterized in that** the supporting shaft diameter (DW) is arranged axially adjacent to a lengthwise toothing (13) for providing a connection with the inner joint part (5).

5. Constant velocity universal ball joint according to claim 4, **characterized in that** the supporting shaft diameter (DW) is smaller than a greatest outer diameter of the lengthwise toothing.

## Revendications

1. Joint homocinétique à billes en forme d'un joint fixe, comprenant
une partie de joint (3) extérieure avec des chemins de roulement à billes extérieurs (4) qui sont configurés axialement sans contre-dépouille;
une partie de joint (5) intérieure avec des chemins de roulement à billes intérieurs (6) qui sont configurés axialement sans contre-dépouille;
des billes (7), transmettant le couple, lesquelles sont guidées respectivement en paires de chemins de roulement formées respectivement par un chemin de roulement à billes extérieur et un chemin de roulement à billes intérieur (4, 6) et dont les points médians (Z) se trouvent sur un diamètre de cercle primitif (PCD) autour d'un point médian de joint (M) et qui ont un diamètre de bille (D);
une cage à billes (8) avec des fenêtres de cage (9) réparties circonférentiellement, dans lesquelles les billes (7) sont reçues et maintenues dans un plan médian commun (E), le nombre des billes transmettant le couple (7) et celui des fenêtres de cage (9) comportant six ;
**caractérisé en ce que** le rapport entre le diamètre de cercle primitif (PCD) et du diamètre de bille (D) se trouve entre 2,96 et 3,08 (2,96 < PCD/D < 3,08) et **en ce que** la cage à billes a une épaisseur de cage radiale (B), le rapport entre l'épaisseur de cage (B) et le diamètre du cercle primitif (PCD) se trouve entre 0,08 et 0,1 (0,08 < B/PCD < 0,1).

2. Joint homocinétique selon la revendication 1, **caractérisé en ce que** la cage à billes a une épaisseur de cage radiale (8), le rapport entre l'épaisseur de cage (B) et le diamètre de bille (D) se trouvant entre 0,27 et 0,29 (0,27 < B/D < 0,29).

3. Joint homocinétique selon la revendication 1 ou 2 **caractérisé en ce que** dans la région des fenêtres (9) la cage à billes (8) a une épaisseur de cage radiale (B) et qu'un arbre (15) assemblé solidaire en rotation avec la partie de joint intérieure a un diamètre d'arbre portant (DW), le rapport entre l'épaisseur de cage (B) et le diamètre d'arbre portant (DW) se trouve entre 0,21 et 0,24 (0,21 < B / DW < 0,24).

4. Joint homocinétique selon la revendication 3, **caractérisé en ce que** le diamètre de l'arbre portant (DW) est agencé axialement adjacent d'une denture longitudinale (13) pour la connexion avec la partie de joint intérieure (5).

5. Joint homocinétique selon la revendication 4, **caractérisé en ce que** le diamètre d'arbre portant (DW) est plus petit qu'un diamètre extérieur le plus grand de la denture longitudinale.
